# EUROPEAN PATENT APPLICATION

(11) **EP 4 362 574 A1**
(43) Date of publication of application: **01.05.2024**
(21) Application number: 23204095.6
(22) Date of filing: 17.10.2023
(51) Int. Cl.: H04W 68/00, H04W 68/02

(54) **PAGING UPDATE INDICATION FOR ENHANCED PAGING STRATEGY**

(30) Priority: 26.10.2022 IN 202241060958
(71) Applicant: Nokia Technologies Oy, 02610 Espoo (FI)
(72) Inventor: ALWAR, Ethiraj, Bangalore (IN); SELVAGANAPATHY, Srinivasan, Bangalore (IN); GODIN, Philippe, Versailles (FR); HELMERS, Hakon, Sceaux (FR)
(74) Representative: Nokia EPO representatives

(57) **Abstract**

Paging update indications for enhanced paging strategy are provided. An apparatus may include at least one processor, and at least one memory storing instructions that, when executed by the processor, may cause the apparatus at least to identify at least one of peer nodes from which paging messages were received for paging actions towards a user equipment. The apparatus may, based on determined radio conditions by the apparatus, be further caused to trigger sending of a notification message including paging recommendation information towards the at least one of identified peer nodes from which the paging messages were received. In a scenario, the determined radio conditions may be due to one or more unsuccessful uplink random access channel transmissions in one or more cells managed by the apparatus. These one or more cells may be affected by remote interference.

## Description

### TECHNICAL FIELD:

Some example embodiments may generally relate to mobile or wireless telecommunication systems, such as Long Term Evolution (LTE) or fifth generation (5G) new radio (NR) access technology, or 5G beyond, or other communications systems. For example, certain example embodiments may relate to paging update indications for enhanced paging strategy.

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (5G) radio access technology or new radio (NR) access technology. Fifth generation (5G) wireless systems refer to the next generation (NG) of radio systems and network architecture. 5G network technology is mostly based on new radio (NR) technology, but the 5G (or NG) network can also build on E-UTRAN radio. It is estimated that NR may provide bitrates on the order of 10-20 Gbit/s or higher, and may support at least enhanced mobile broadband (eMBB) and ultra-reliable low-latency communication (URLLC) as well as massive machine-type communication (mMTC). NR is expected to deliver extreme broadband and ultra-robust, low-latency connectivity and massive networking to support the Internet of Things (IoT).

### SUMMARY:

Various exemplary embodiments provide an apparatus that may include at least one processor, and at least one memory storing instructions. The instructions, when executed by the at least one processor, may cause the apparatus at least to identify at least one of peer nodes from which paging messages were received for paging actions to user equipment. The apparatus may further, based on determined radio conditions by the apparatus, trigger sending of a notification message comprising paging recommendation information to the at least one of identified peer nodes.

Various exemplary embodiments provide an apparatus that may include at least one processor, and at least one memory storing instructions. The instructions, when executed by the at least one processor, may cause the apparatus at least to receive a notification message from a radio access node comprising paging recommendation information concerning the radio access node. The apparatus may also be caused to update a paging strategy using the received paging recommendation information for subsequent paging actions involving this radio access node.

Certain exemplary embodiments provide an apparatus that may include means for identifying at least one of peer nodes from which paging messages were received for paging actions to user equipment. The apparatus may also include means for, based on determined radio conditions by the apparatus, triggering sending of a notification message comprising paging recommendation information to the at least one of identified peer nodes.

Certain exemplary embodiments provide an apparatus that may include means for receiving a notification message from a radio access node comprising paging recommendation information concerning the radio access node. The apparatus may also include means for updating a paging strategy using the received paging recommendation information for subsequent paging actions involving this radio access node.

Some exemplary embodiments provide a method that may include identifying at least one of peer nodes from which paging messages were received for paging actions to user equipment. The method may also include based on determined radio conditions by the apparatus, triggering sending of a notification message comprising paging recommendation information to the at least one of identified peer nodes.

Some exemplary embodiments provide a method that may include receiving a notification message from a radio access node comprising paging recommendation information concerning the radio access node. The method may also include updating a paging strategy using the received paging recommendation information for subsequent paging actions involving this radio access node.

Various exemplary embodiments provide a non-transitory computer readable medium that may include program instructions that, when executed by an apparatus, cause the apparatus to perform at least identifying at least one of peer nodes from which paging messages were received for paging actions to user equipment. The apparatus may also be caused to perform identifying at least one of peer nodes from which paging messages were received for paging actions to user equipment.

Various exemplary embodiments provide a non-transitory computer readable medium that may include program instructions that, when executed by an apparatus, cause the apparatus to perform at least receiving a notification message from a radio access node comprising paging recommendation information concerning the radio access node. The apparatus may also be caused to perform updating a paging strategy using the received paging recommendation information for subsequent paging actions involving this radio access node.

Certain exemplary embodiments may provide a computer program that may include instructions that, when executed by an apparatus, cause the apparatus to perform at least one of the methods described herein.

Certain exemplary embodiments may provide an apparatus that may include one or more circuitry configured to perform at least one of the methods described herein.

### BRIEF DESCRIPTION OF THE DRAWINGS:

For proper understanding of example embodiments, reference should be made to the accompanying drawings, as follows:
FIG. 1 illustrates an example of a signal flow of a Next Generation NodeB (gNB) and an application management function (AMF) communicating a paging update notification;
FIG. 2 illustrates an example of a signal flow of multiple gNBs and an AMF performing a paging procedure according to various exemplary embodiments;
FIG. 3 illustrates an example of a flow diagram of a method according to various exemplary embodiments;
FIG. 4 illustrates another example of a flow diagram of a method according to some exemplary embodiments; and
FIG. 5 illustrates a set of apparatuses according to various exemplary embodiments.

### DETAILED DESCRIPTION:

It will be readily understood that the components of certain example embodiments, as generally described and illustrated in the figures herein, may be arranged and designed in a wide variety of different configurations. The following is a detailed description of some exemplary embodiments of systems, methods, apparatuses, and non-transitory computer program products for paging update indications for enhanced paging strategy. Although the devices discussed below and shown in the figures refer to 5G or Next Generation NodeB (gNB) devices, this disclosure is not limited to only gNBs. For example, the following description may also apply to any type of network access node.

In an NR network, when a device, such as user equipment (UE), does not have any active or ongoing data transmissions, the device may enter an idle state. When data is to be communicated to the device thereafter, the network may probe the idle device by sending paging message and the device correspondingly responds by, for example, random access. Paging may allow the network to communicate with devices that are in a radio resource control (RRC) idle state and/or in an RRC inactive state using the paging messages. Paging may also allow the network to notify the device in an RRC idle, an RRC inactive, and/or an RRC connected state of a change in system and/or network information.

When the device is in the RRC idle state or the RRC inactive state, the device may monitor paging channels for core network initiated or radio access network (RAN) initiated paging. The monitoring of the paging channels may be continuous or periodic/cyclical. When the device is in the RRC connected state, the device may monitor the paging channels in any paging occasion (PO) indicated in the system information.

During the paging procedure, uplink transmissions may be affected by interference as detailed in 3^{rd} generation mobile broadband partnership project (3GPP) 38.300. For example, a type of interference may be known as remote interference, which may be caused by atmospheric ducting. Atmospheric ducting may be caused by lower densities at higher altitudes in the Earth's atmosphere, which causes a reduced refractive index so that signals bend back towards the Earth. When atmospheric ducting occurs, radio signals can travel a relatively long distance, and the propagation delay exceeds a guard period used to avoid the interference between uplink (UL) and downlink (DL) transmissions in different cells. The atmospheric ducting may result in the DL signals of an aggressor cell interfering with the UL signals of a victim cell that is far away from the aggressor. Such interference may be referred to as remote interference (RI).

Random access performance may be highly impacted due to remote interference. An RI-specific power ramp-up configuration may be used as a mitigation action at RAN level. The impact on the random access performance may be triggered due to the RRC idle state to the RRC connected state transition or the RRC inactive state to the RRC connected state transition. These transitions may be mobile originated, which occurs when the UE causes the transition on its own, and/or mobile terminated, which occurs when the UE is instructed to transition from the network by paging.

Although various exemplary embodiments described herein may refer to the mobile terminated transition, the exemplary embodiments are not limited to only this transition. Certain exemplary embodiments may apply to other types of transitions, such as mobile originated. In the mobile terminated transition, a network entity, such as an access and mobility management function (AMF) may trigger a paging procedure. For example, the AMF may trigger a next generation application protocol (NGAP) paging procedure to cause paging of one or more gNBs for communicating with one or more UEs. The exemplary embodiments may apply multiple different types of UEs states, such as mobile terminated services, multicast services, broadcast services, and the like.

The AMF may send an NGAP paging message that includes assistance data for performing the paging. The assistance data for the paging may include one or more elements of a paging strategy or protocol of the AMF in which the AMF informs and/or instructs the gNB that receives the paging messages for communicating with the UE. The paging strategy of the AMF may be based on information on recommended cells and/or RAN nodes, which may be provided to the AMF by the most recent serving NG-RAN node when the UE leaves the RRC connected state. This information is further provided by the AMF to any new paged NG-RAN node in the NGAP.

The one or more elements of the paging strategy of the AMF may include, for example, a list of cells that the AMF recommends to be paged, paging attempt information that may indicate the total number of paging attempts, the number of remaining paging attempts, and whether the AMF intends to escalate the paging at the next paging attempt. The AMF may escalate the paging at the next paging attempt by enlarging a paging area. The paging area may be a geographic area or region in which paging messages may be sent to establish communication with the one or more UEs.

The AMF may include in the paging messages a paging priority to inform and/or instruct the RAN that the UE be paged with priority. The AMF may determine whether or not to include the paging priority in the paging message based on an allocation and retention priority (ARP) value that may be included in a message received from a session management function (SMF) for an internet protocol (IP) packet waiting to be delivered in a user plane function (UPF). If the ARP value is associated with select priority services, such as MPS and/or MCS, the AMF includes a paging priority in the paging message. When the RAN receives a paging message with the paging priority, the RAN handles the page with priority. Even if the RAN handles the paging procedure with priority, the random access procedure may still incur additional delay when the UE is within one of the victim cells of remote interference.

According to various exemplary embodiments, it may be advantageous to the efficiency of the NR system for a paged gNB to provide feedback to a node performing the paging, such as the AMF or another gNB. The feedback may include, for example, information on remote interference, to be used in determining or modifying the paging strategy by the AMF. For example, if the paging procedure is performed efficiently in good radio conditions and the AMF receives no paging response from a UE, the AMF may correctly assume that the UE may not be located in the paging area. In this case, the AMF may modify the paging strategy by, for example, escalating the size of the paging area to a broader area at a next paging attempt. In another case, the paging may be performed in bad radio conditions that negatively impact the UE's ability to either receive or respond to the paging message. In this case, even though the UE may be located within the paging area, the AMF may incorrectly assume the UE is not within the paging area and unnecessarily escalate a size of the paging area. This may hinder the efficiency of the paging procedure, cause unnecessary load on the AMF and/or gNB(s) involved, and uselessly involve other cells within the paging area where the UE is not present.

A network entity, such as a RAN node, a gNB, and the like, that communicates with one or more UEs and the AMF may be best situated to monitor radio paging conditions and provide the feedback to other network entities, such as the AMF. For example, the gNB may perform a remote interference management (RIM) information transfer to transfer remote interference information to the AMF. The gNB may perform the RIM information transfer for either or both UL transmissions and DL transmissions. The AMF may not interpret the transferred RIM information, and the RIM information transfer uses non-UE associated signalling.

In various exemplary embodiments, the network entity, such as the gNB, may provide a paging update notification to the AMF. Although the description herein refers to the network entity as a gNB, the exemplary embodiments are not limited to only the gNB. Some exemplary embodiments may be implemented by other network entities, such as a RAN node, a base station, and the like.

The paging update notification may include an update of recommended paging assistance information, which may include a list of recommended cells, and/or an update of recommended paging area scope. The paging update notification may be used by the gNB to update the AMF. By updating the AMF, the AMF may be able to determine the paging optimization strategy to mitigate and/or avoid unnecessary and burdensome escalation of the paging procedure, such as escalating the size of the paging area. The AMF may also be able to mitigate and/or eliminate the associated additional paging channel load and random access channel (RACH) load due to the unnecessary and/or useless increased/broader area of the paging area.

Further, in some exemplary embodiments, the gNB may provide cause information within or in association with the paging update notification. The cause information may be a cause for the update to the paging assistance information and/or paging area scope. For example, the cause information may include an indication or other description of the remote interference such as the severity of the interference.

The paging update notification may be sent at any time. For example, the paging update notification may be sent by the gNB to the AMF after a first paging procedure (attempt) is performed, which may allow the gNB to report to the AMF about a paging radio conditions during the first paging attempt.

The gNB may be part of the RAN. The paging update notification provides the RAN with a mechanism to notify the AMF about an updated recommended paging assistance information, which may include the list of recommended cells, and/or recommended paging area scope in the paging area of the RAN on specific triggering conditions.

During a paging procedure, the RAN may implement procedures or strategies based on, for example, whether the paging is impaired, blocked, and/or unblocked. In the case that paging is impaired, the RAN may adjust a paging response timer threshold to be a longer value by increasing the time of the timer threshold to offset for the impact in the random access performance. The RAN may send assistance information to the AMF indicating the adjustment to the paging response timer threshold, while the RAN may continue to perform the paging procedure. This may help the AMF to correspondingly increase a paging repetition timer of the AMF. Further, the RAN may implement a mechanism to filter one or more services to reduce the RACH load. For example, the RAN may filter services so as to only allow paging for emergency communications.

In the case that paging is blocked, the RAN may send the recommended paging assistance information to the AMF and may stop the paging procedure to avoid an overload of the RACH. In the case that paging is unblocked, the RAN performs the paging procedure normally or resumes the paging procedure using normal procedures when paging was previously blocked or impaired. The RAN strategy or procedures for paging may be modelled as an operator configurable parameter.

The AMF may receive the paging update notification, which may include the paging assistance information, from the RAN. The AMF may use the latest paging update notification when paging is to be triggered to determine the assistance data for paging in the next paging attempt/iteration. The AMF may implement a mechanism or procedure to update a paging retry and/or paging escalation procedure. The AMF may also implement a mechanism or procedure to update the paging optimization strategy of the AMF to be used for the next paging attempt/iteration.

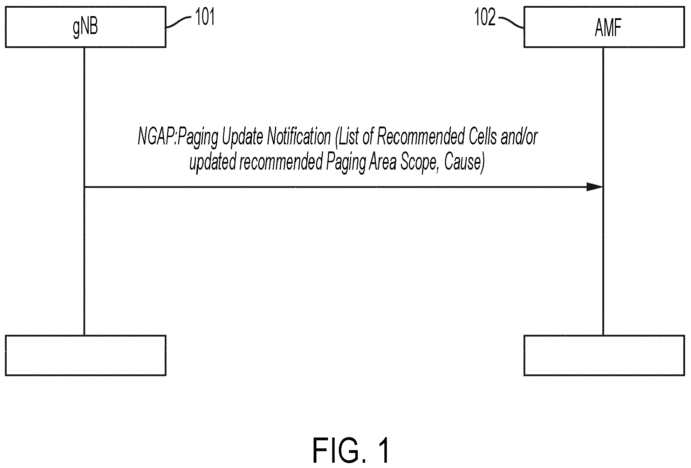

FIG. 1 illustrates an example of a signal flow of an NG-RAN node, such as gNB 101, and an AMF 102 that may communicate a paging update notification according to various exemplary embodiments. The paging update notification procedure may be used when the gNB 101 detects that received assistance data for paging from the AMF 102 may not be optimized for the current radio conditions. For example, the current radio conditions may be that one or more cells of the gNB 101 are or have been affected by remote interference.

The gNB 101 may monitor the radio conditions of communications between the gNB 101 and one or more UEs. The gNB 101 may identify one or more triggering conditions in the RAN that indicate that a paging area of the paging procedure should be updated. In some exemplary embodiments, the trigger condition may be due to remote interference (RI) in RI victim cells which belong to the paging area of the RAN. Once the gNB 101 identifies that one or more cells may be a victim of remote interference, the gNB 101 determines which impacted cells are in the configured RAN paging area. The gNB 101 may initiate the paging update notification procedure to notify the AMF 102 of the remote interference impacting the one or more cells in the RAN paging area.

The gNB 101 may initiate the paging update notification procedure by sending a paging update notification message to the AMF 102. The paging update notification may include a list of recommended cells, which are recommended by the gNB 101, for the AMF 102 to use for the paging strategy. When the paging update notification includes the list of recommended cells, the AMF 102 may use the list of recommended cells to determine whether to update the paging area in a next paging iteration or update an intended total number of paging attempts and a paging area scope to be included in the assistance data for paging in the next paging iteration.

The paging update notification may further include a cause of the current radio conditions, such as remote interference. When the paging update notification includes cause information, the AMF 102 may further use the cause information to adjust the paging strategy for paging in the next paging iteration. The paging update notification may further include an indication of severity, such as low, medium, high, and the like, of current poor radio conditions, such as remote interference.

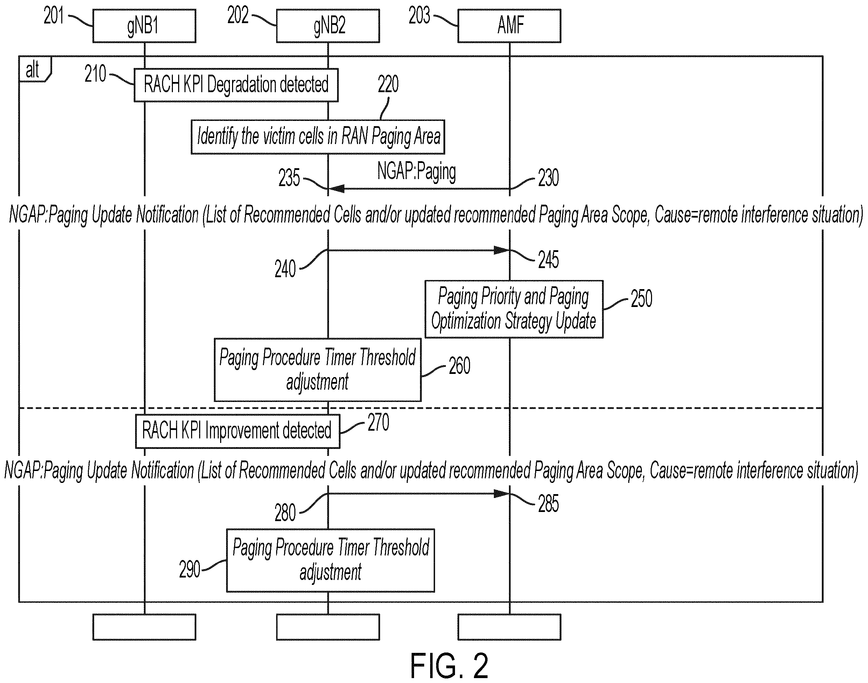

FIG. 2 illustrates an example of a signal flow of multiple gNBs 201/202 and an AMF 203 that may perform a paging procedure according to various exemplary embodiments. At 210, one or more of the gNB 201 and gNB 202 determine/detect whether one or more key performance indicators (KPI) of the RACH are or have been degraded, which may be a trigger condition for providing a paging update notification to the AMF 203. In the exemplary embodiments in which remote interference occurs, the RACH KPI performance may be degraded by the impact of the remote interference. In the example of FIG. 2, gNB 202 detects that the RACH KPI performance may be degraded due to remote interference.

At 220, the gNB 202 may identify one or more cells in the RAN paging area that may be subjected to remote interference. These one or more cells undergoing remote interference may be referred to as victim cells.

At 230, the AMF 203 may perform a paging procedure. The AMF 203 may provide one or more NGAP paging messages to the gNB 202. The paging messages may include assistance data for performing the paging. The assistance data for the paging may include one or more elements of a paging strategy of the AMF 203 in which the AMF 203 informs and/or instructs the gNB 202 for communicating/paging one or more UEs. At 235, the gNB 202 receives the one or more paging messages from the AMF 203.

At 240, the gNB 202 may initiate a paging update notification procedure by generating and/or providing a paging update notification message to the AMF 203. The paging update notification may include a list of recommended cells and/or an updated recommended paging area scope. As discussed above, the list of recommended cells may be a list of cells that the gNB 202 recommends to be used for the paging strategy of the AMF 203. The updated recommended paging area scope may be an area recommended by the gNB 202, such as a number of cells, specified cells, a geographic area, and the like, or whether to continue using the same paging area or not to be used for paging in the next paging iteration/attempt.

The gNB 202 may initiate the paging update notification procedure upon receiving the one or more paging messages from the AMF 203, and/or upon identifying one or more cells in the RAN paging area satisfy a trigger condition, such as being subjected to remote interference.

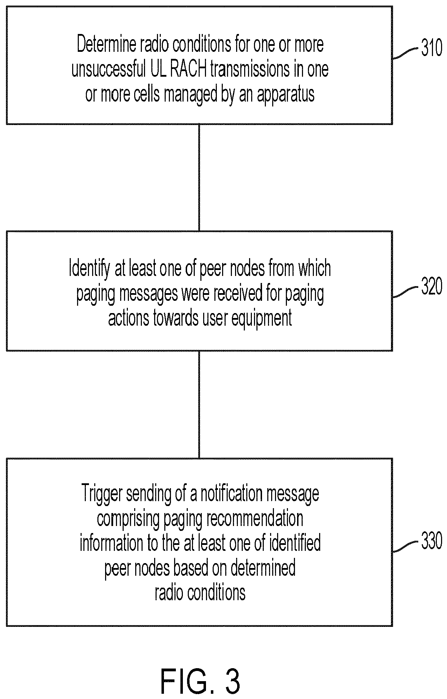

The paging update notification may further include cause information, which may indicate a cause for the recommendations provided by the gNB 202 to the AMF 203. In the example of FIG. 3, the cause information may be information about the remote interference that affected one or more cells in the paging area. The paging update notification may specify the radio conditions of one or more cells in various ways. The paging update notification may specify the radio conditions more generally by indicating the conditions are good or bad. The paging update notification may specify the radio conditions as high, medium, or low. Alternatively or additionally, the paging update notification may specify the radio conditions more specifically using data on differences between UL and DL transmissions, such as differences in the signals/symbols. A skilled artisan would readily understand that there are various additional ways in which the paging update notification may further specify the radio conditions of one or more cells.

At 245, the AMF 203 may receive the paging update notification, which may include the list of recommended cells and/or the updated recommended paging area scope, and/or the cause information. At 250, the AMF 203 may determine and/or update the paging priority and/or the paging optimization strategy. The AMF 203 may use the information in the paging update notification to determine whether and how to modify the paging optimization strategy. The AMF 203 may determine to retransmit/re-perform the paging procedure using the same paging optimization strategy as a previous paging iteration/attempt. Alternatively, the AMF 203 may determine to modify the paging optimization strategy based on the information in the paging update notification. For example, the AMF 203 may escalate/increase a paging area, modify the list of cells for paging, modify the total number of paging attempts, modify the number of allowed remaining attempts, increase the repetition timer , which may be the time before triggering the repetition of the paging, and/or the like.

At 260, the gNB 202 may adjust a paging procedure timer threshold based on the identified victim cells and/or information related to or included in the paging update notification. The paging procedure timer may be internal logic of the gNB 202. For example, the gNB 202 may increase the paging procedure timer threshold for victim cells to provide the victim cells with additional time to establish random access with the gNB 202. This additional time may be used to compensate for the remote interference.

Some or all of the procedures of 210-260 may be performed as an iterative sequence that may be performed periodically or each time the paging procedure is performed by the AMF 203. For example, during each iteration/attempt of paging initiated by the AMF 203, the gNB 202 may provide a paging update notification to the AMF 203 such that the AMF 203 may modify the paging strategy for the next paging iteration/attempt.

Alternatively, or in addition to some or all of the procedures of 210-260, some exemplary embodiments address a case in which the degradation of the RACH KPI may not continue indefinitely and the RACH KPI may improve and/or return to a normal operating standard. In the example illustrated in FIG. 2, at 270, the gNB 202 may detect/determine that the RACH KPI may be improving such that the degradation may be reduced or eliminated. At 280, the gNB 202 provides another paging update notification to the AMF 203. This paging update notification may include information updating the AMF 203 on the improved radio conditions and RACH KPI. At 285, the AMF 203 may receive the paging update notification, which informs the AMF 203 about the improved radio conditions/RACH KPI. The AMF 203 may use this information to update the paging priority and/or paging optimization strategy accordingly.

At 290, the gNB 202 may further adjust the paging procedure timer threshold based on the information related to or included in the paging update notification, such as information on the improved radio conditions/RACH KPI. For example, the gNB 202 may reduce the time of the paging procedure timer threshold and/or return the paging procedure timer threshold to an initial or pre-set value.

Although FIG. 2 illustrates an example in which the one or more paging messages are received by the gNB 202 from the AMF 203, the exemplary embodiments are not limited as such. For example, the gNB 202 may perform the paging procedure with a peer node, such as peer gNB 201 and the like, which may be in communication with the AMF 203.

According to some exemplary embodiments, the peer gNB 201 may perform the paging procedure. The peer gNB 201 may provide one or more NGAP paging messages to the gNB 202, which may include assistance data for performing the paging. The assistance data may include one or more elements of a paging strategy of the peer gNB 201 in which the peer gNB 201 informs and/or instructs the gNB 202 for communicating/paging one or more UEs. The gNB 202 receives the one or more paging messages from the peer gNB 201.

The gNB 202 may initiate the paging update notification procedure by generating and/or providing a paging update notification message to the peer gNB 201. The paging update notification may include a list of recommended cells and/or an updated recommended paging area scope. The gNB 202 may initiate the paging update notification procedure upon receiving the one or more paging messages from the peer gNB 201, and/or upon identifying one or more cells in the RAN paging area satisfy a trigger condition, such as being subjected to remote interference.

The paging update notification may further include cause information, which may indicate a cause for the recommendations provided by the gNB 202 to the peer gNB 201. For example, the cause information may be information about the remote interference that affected one or more cells in the paging area. The peer gNB 201 may receive the paging update notification, which may include the list of recommended cells and/or the updated recommended paging area scope, and/or the cause information. The peer gNB 201 may determine and/or update the paging priority and/or the paging optimization strategy. The peer gNB 201 may use the information in the paging update notification to determine whether and how to modify the paging optimization strategy. The peer gNB 201 may determine to retransmit/re-perform the paging procedure, or to modify the paging optimization strategy based on the information in the paging update notification. Further, the gNB 202 may adjust a paging procedure timer threshold based on the identified victim cells and/or information related to or included in the paging update notification.

Alternatively, or in addition to some or all of the procedures discussed above, some exemplary embodiments address a case in which the degradation of the RACH KPI may not continue indefinitely and the RACH KPI may improve and/or return to a normal operating standard. The gNB 202 may detect/determine that the RACH KPI may be improving such that the degradation may be reduced or eliminated. The gNB 202 provides another paging update notification to the peer gNB 201. This paging update notification may include information updating the peer gNB 201 on the improved radio conditions and RACH KPI. The peer gNB 201 may receive the paging update notification, which informs the peer gNB 201 about the improved radio conditions/RACH KPI. The gNB 202 may then adjust the paging procedure timer threshold based on the information related to or included in the paging update notification, such as information on the improved radio conditions/RACH KPI.

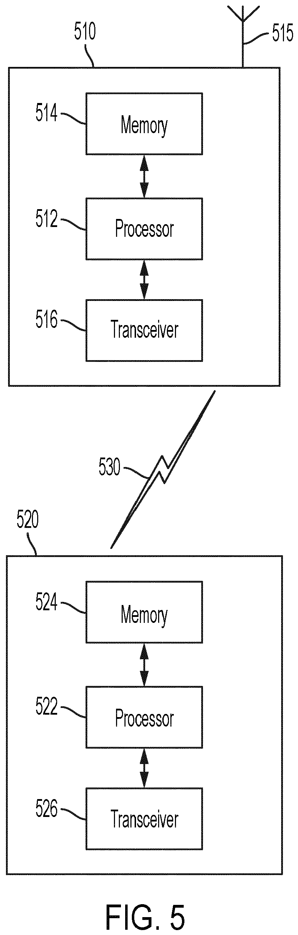

FIG. 3 illustrates an example flow diagram of a method, according to certain exemplary embodiments. In an example embodiment, the method of FIG. 3 may be performed by a network element, or a group of multiple network elements in a 3GPP system, such as LTE or 5G-NR. For instance, in an exemplary embodiment, the method of FIG. 3 may be performed by a gNB similar to apparatus 510 illustrated in FIG. 5.

According to various exemplary embodiments, the method of FIG. 3 may include, at 310, determining radio conditions for one or more unsuccessful uplink RACH (UL RACH) transmissions in one or more cells managed by the apparatus 510.

At 320, the apparatus 510 may identify at least one of multiple peer nodes from which paging messages were received for paging actions towards user equipment. At 330, the apparatus 510 may trigger sending of a notification message that may include paging recommendation information towards the at least one of identified peer nodes from which the paging messages were received.

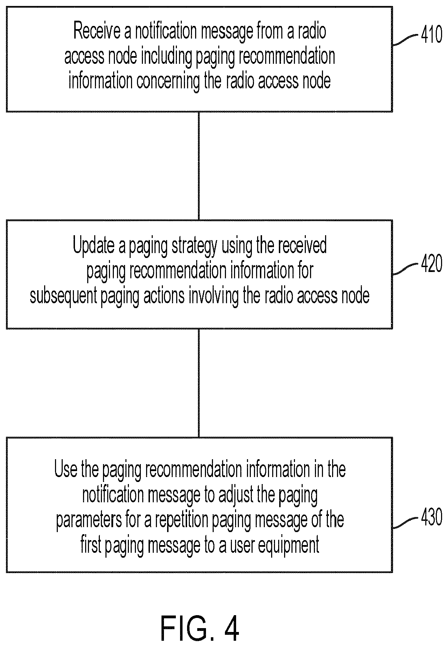

FIG. 4 illustrates an example flow diagram of a method, according to certain exemplary embodiments. In an example embodiment, the method of FIG. 4 may be performed by a network element, or a group of multiple network elements in a 3GPP system, such as LTE or 5G-NR. For instance, in an exemplary embodiment, the method of FIG. 4 may be performed by an AMF similar to apparatus 520 illustrated in FIG. 5.

According to various exemplary embodiments, the method of FIG. 4 may include, at 410, receiving a notification message from a radio access node that includes paging recommendation information concerning the radio access node. At 420, the method may include updating a paging strategy using the received paging recommendation information for subsequent paging actions involving this radio access node.

At 430, the method of FIG. 4 may further include using the paging recommendation information in the received notification message from the radio access node to adjust the paging parameters for a repetition paging message of the first paging message to the user equipment.

FIG. 5 illustrates a set of apparatuses 510 and 520 according to various exemplary embodiments. In the various exemplary embodiments, the apparatus 510 may be a network, core network element, or element in a communications network or associated with such a network, such as a base station, an NE, or a gNB. For example, gNBs 101, 201, and 202 may be examples of apparatus 510 according to various exemplary embodiments as discussed above. It should be noted that one of ordinary skill in the art would understand that apparatus 510 may include components or features not shown in FIG. 5. In addition, apparatus 520 may be a part of the core network, a network entity or a sub-component or processing functions of a network entity of computation device connected to the network, such as an application management function (AMF). For example, AMF 102 and 203 may be examples of apparatus 520 according to various exemplary embodiments as discussed above. It should be noted that one of ordinary skill in the art would understand that apparatus 520 may include components or features not shown in FIG. 5.

According to various exemplary embodiments, the apparatus 510 may include at least one processor, and at least one memory, as shown in FIG. 5. The memory may store instructions that, when executed by the processor, cause the apparatus 510 to identify at least one of peer nodes from which paging messages were received for paging actions towards user equipment. The apparatus 510 may, based on determined radio conditions, trigger sending of a notification message that includes paging recommendation information towards the at least one of identified peer nodes from which the paging messages were received and the apparatus 520 from which the paging messages were received. The apparatus 510 may be an NG-RAN node.

Further, according to various exemplary embodiments, the apparatus may be further caused to determine radio conditions for one or more unsuccessful UL RACH transmissions in one or more cells managed by the apparatus.

Further, according to certain exemplary embodiments, determining of the unsuccessful UL RACH transmissions in the one or more cells may include an interference by an interferer. The interferer may be a remote radio access node transmitting on a same frequency.

According to some exemplary embodiments, the determining of the radio conditions for the one or more unsuccessful UL RACH transmissions in the one or more cells may include determining that the one or more unsuccessful UL RACH transmissions are in one or more cells that are managed by the apparatus upon receiving the paging message for the user equipment from a sender network node, such as the apparatus 520. The received paging message may include a paging area including at least one of the at least one or more cells managed by the apparatus 510.

According to certain exemplary embodiments, the sender network node may be identified as one of the at least one of peer nodes from which the paging messages were received, and to which the notification message is sent through the triggering. The sender network node may be one of the AMF in a core network or a radio access node in a radio access network.

According to some exemplary embodiments, the paging recommendation information may include at least one of (a) a list of cells, (b) an indication of the radio conditions for the one or more unsuccessful UL RACH transmissions or an indication of a level of severity characterizing the radio conditions, or (c) a recommendation for paging strategy.

According to various exemplary embodiments, the recommendation for paging strategy may include at least one of a recommendation to send a repetition of paging with the same paging area, a recommendation on the number of paging repetitions to perform keeping the same paging area, a recommendation on a list of cells to be paged in a next paging attempt, a recommendation to increase a paging repetition timer due to delay in paging response, or a recommendation to update or increase a total number of paging attempts.

According to various exemplary embodiments, the apparatus 520 may include at least one processor, and at least one memory, as shown in FIG. 5. The memory may store computer program code that, when executed by the processor, cause the apparatus 520 to receive a notification message from a radio access node that may include paging recommendation information concerning the radio access node. The apparatus 520 may further update a paging strategy using the received paging recommendation information for subsequent paging actions involving this radio access node. The apparatus 520 may be an AMF and the radio access node may be an NG-RAN node.

According to some exemplary embodiments, the paging recommendation information may include at least one of a list of cells and an indication of radio conditions for one or more unsuccessful UL RACH transmissions, or an indication of a level of severity characterizing the radio conditions. Further, the paging recommendation information may include at least one of a list of cells and a recommendation for paging strategy.

According to some exemplary embodiments, the recommendation for paging strategy may include at least one of a recommendation to send a repetition of paging with the same paging area, a recommendation on a number of paging repetitions to perform keeping the same paging area, a recommendation on a paging area to be used in a subsequent paging message, a recommendation on a list of cells to be paged in a subsequent paging message, a recommendation to increase a paging repetition timer due to delay in paging response, or a recommendation to update or increase a total number of paging attempts.

According to certain exemplary embodiments, the updating of the paging strategy for subsequent paging actions involving the radio access node may include at least one of determining to send a repetition of paging with the same paging area, determining a number of paging repetitions to perform keeping the same paging area, determining a paging area to be paged in a subsequent paging message, determining a list of cells to be paged in a subsequent paging message, determining to increase a paging repetition timer due to delay in paging response, or determining to update or increase a total number of paging attempts.

According to certain exemplary embodiments, the notification message from the radio access node may include paging recommendation information concerning the radio access node that is received in relation to the sending of a first paging message for a user equipment by the apparatus 520 which paging area involves this radio access node. The apparatus 520 may be further caused to use the paging recommendation information in the received notification message from the radio access node to adjust the paging parameters for a repetition paging message of the first paging message to the user equipment.

According to some exemplary embodiments, the adjusting of the paging parameters for the repetition paging message of the first paging message may include at least one of determining the paging area of the repetition paging message to be same as the paging area of the first paging message, determining a number of paging repetitions to be performed towards the user equipment keeping the same paging area, determining an updated paging area for the repetition paging message based on the paging recommendation information received in the notification message, determining a time to wait before sending the repetition paging message of the first paging message, or determining a total number of paging attempts to be performed in relation to the paging of the user equipment.

Various exemplary embodiments described above may provide several technical improvements, enhancements, and/or advantages. For instance, in some exemplary embodiments, it may be possible to improve the efficiency of the NR system for a paged gNB to provide feedback to a device performing the paging, such as the AMF or another peer gNB. Some exemplary embodiments may improve the efficiency of the paging procedure, reduce or eliminate unnecessary loads on the AMF and/or gNB(s) involved in the paging procedure, and prevent uselessly involving other cells within the paging area where the UE(s) is not present. Some exemplary embodiments may improve the efficiency of the paging channels in the network by avoiding uselessly involving other cells within the paging area where the UE(s) is not present. Some exemplary embodiments may also improve the efficiency of the random access channels.

In some example embodiments, apparatuses 510 and/or 520 may include one or more processors, one or more computer-readable storage medium (for example, memory, storage, or the like), one or more radio access components (for example, a modem, a transceiver, or the like), and/or a user interface. In some example embodiments, apparatuses 510 and/or 520 may be configured to operate using one or more radio access technologies, such as GSM, LTE, LTE-A, NR, 5G, WLAN, WiFi, NB-IoT, Bluetooth, NFC, MulteFire, and/or any other radio access technologies.

As illustrated in the example of FIG. 5, apparatuses 510 and/or 520 may include or be coupled to processors 512 and 522, respectively, for processing information and executing instructions or operations. Processors 512 and 522 may be any type of general or specific purpose processor. In fact, processors 512 and 522 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 512 (and 522) for each of apparatuses 510 and/or 520 is shown in FIG. 5, multiple processors may be utilized according to other example embodiments. For example, it should be understood that, in certain example embodiments, apparatuses 510 and/or 520 may include two or more processors that may form a multiprocessor system (for example, in this case processors 512 and 522 may represent a multiprocessor) that may support multiprocessing. According to certain example embodiments, the multiprocessor system may be tightly coupled or loosely coupled to, for example, form a computer cluster).

Processors 512 and 522 may perform functions associated with the operation of apparatuses 510 and/or 520, respectively, including, as some examples, precoding of antenna gain/phase parameters, encoding and decoding of individual bits forming a communication message, formatting of information, and overall control of the apparatuses 510 and/or 520, including processes illustrated in FIGs. 1-4.

Apparatuses 510 and/or 520 may further include or be coupled to memory 514 and/or 524 (internal or external), respectively, which may be coupled to processors 512 and 522, respectively, for storing information and instructions that may be executed by processors 512 and 522. Memory 514 (and memory 524) may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 514 (and memory 524) can be comprised of any combination of random access memory (RAM), read only memory (ROM), static storage such as a magnetic or optical disk, hard disk drive (HDD), or any other type of non-transitory machine or computer readable media. The instructions stored in memory 514 and memory 524 may include program instructions or computer program code that, when executed by processors 512 and 522, enable the apparatuses 510 and/or 520 to perform tasks as described herein.

In certain example embodiments, apparatuses 510 and/or 520 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processors 512 and 522 and/or apparatuses 510 and/or 520 to perform any of the methods illustrated in FIGs. 1-4.

In some exemplary embodiments, apparatus 510 may also include or be coupled to one or more antennas 515 for receiving a downlink signal and for transmitting via an uplink from apparatus 510. Apparatuses 510 and/or 520 may further include transceivers 516 and 526, respectively, configured to transmit and receive information. The transceiver 516 and 526 may also include a radio interface that may correspond to a plurality of radio access technologies including one or more of GSM, LTE, LTE-A, 5G, NR, WLAN, NB-IoT, Bluetooth, BT-LE, NFC, RFID, UWB, or the like. The radio interface may include other components, such as filters, converters (for example, digital-to-analog converters or the like), symbol demappers, signal shaping components, an Inverse Fast Fourier Transform (IFFT) module, or the like, to process symbols, such as OFDMA symbols, carried by a downlink or an uplink.

For instance, transceivers 516 and 526 may be respectively configured to modulate information on to a carrier waveform for transmission, and demodulate received information for further processing by other elements of apparatuses 510 and/or 520. In other example embodiments, transceivers 516 and 526 may be capable of transmitting and receiving signals or data directly. Additionally or alternatively, in some example embodiments, apparatuses 510 and/or 520 may include an input and/or output device (I/O device). In certain example embodiments, apparatuses 510 and/or 520 may further include a user interface, such as a graphical user interface or touchscreen.

In certain example embodiments, memory 514 and memory 524 store software modules that provide functionality when executed by processors 512 and 522, respectively. The modules may include, for example, an operating system that provides operating system functionality for apparatuses 510 and/or 520. The memory may also store one or more functional modules, such as an application or program, to provide additional functionality for apparatuses 510 and/or 520. The components of apparatuses 510 and/or 520 may be implemented in hardware, or as any suitable combination of hardware and software. According to certain example embodiments, apparatus 510 may optionally be configured to communicate with apparatus 520 via a wireless or wired communications link 530 according to any radio access technology, such as NR.

According to certain example embodiments, processors 512 and 522, and memory 514 and 524 may be included in or may form a part of processing circuitry or control circuitry. In addition, in some example embodiments, transceivers 516 and 526 may be included in or may form a part of transceiving circuitry.

As used herein, the term "circuitry" may refer to hardware-only circuitry implementations (for example, analog and/or digital circuitry), combinations of hardware circuits and software, combinations of analog and/or digital hardware circuits with software/firmware, any portions of hardware processor(s) with software, including digital signal processors, that work together to cause an apparatus (for example, apparatus 510 and/or 520) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor or multiple processors, or portion of a hardware circuit or processor, and the accompanying software and/or firmware. The term circuitry may also cover, for example, a baseband integrated circuit in a server, cellular network node or device, or other computing or network device.

A computer program product may include one or more computer-executable components which, when the program is run, are configured to carry out some example embodiments. The one or more computer-executable components may be at least one software code or portions of it. Modifications and configurations required for implementing functionality of certain example embodiments may be performed as routine(s), which may be implemented as added or updated software routine(s). Software routine(s) may be downloaded into the apparatus.

As an example, software or a computer program code or portions of it may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (for example, apparatuses 510 and/or 520), for example through the use of an application specific integrated circuit (ASIC), a programmable gate array (PGA), a field programmable gate array (FPGA), or any other combination of hardware and software. In yet another example embodiment, the functionality may be implemented as a signal, a non-tangible means that can be carried by an electromagnetic signal downloaded from the Internet or other network.

According to certain example embodiments, an apparatus, such as a node, device, or a corresponding component, may be configured as circuitry, a computer or a microprocessor, such as single-chip computer element, or as a chipset, including at least a memory for providing storage capacity used for arithmetic operation and an operation processor for executing the arithmetic operation.

The features, structures, or characteristics of example embodiments described throughout this specification may be combined in any suitable manner in one or more example embodiments. For example, the usage of the phrases "certain embodiments," "an example embodiment," "some embodiments," or other similar language, throughout this specification refers to the fact that a particular feature, structure, or characteristic described in connection with an embodiment may be included in at least one embodiment. Thus, appearances of the phrases "in certain embodiments," "an example embodiment," "in some embodiments," "in other embodiments," or other similar language, throughout this specification do not necessarily refer to the same group of embodiments, and the described features, structures, or characteristics may be combined in any suitable manner in one or more example embodiments. Further, the terms "cell", "node", "gNB", or other similar language throughout this specification may be used interchangeably.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

One having ordinary skill in the art will readily understand that the disclosure as discussed above may be practiced with procedures in a different order, and/or with hardware elements in configurations which are different than those which are disclosed. Therefore, although the disclosure has been described based upon these example embodiments, it would be apparent to those of skill in the art that certain modifications, variations, and alternative constructions would be apparent, while remaining within the spirit and scope of example embodiments. Although the above embodiments refer to 5G NR and LTE technology, the above embodiments may also apply to any other present or future 3GPP technology, such as LTE-advanced, and/or fourth generation (4G) technology.

### Partial Glossary:

- 3GPP: 3rd Generation Partnership Project
- 5G: 5th Generation
- 5GCN: 5G Core Network
- 5GS: 5G System
- AMF: Application Management Function
- ARP: Allocation and Retention Priority
- DL: Downlink
- EMBB: Enhanced Mobile Broadband
- gNB: 5G or Next Generation NodeB
- LTE: Long Term Evolution
- NGAP: Next Generation Application Protocol
- NR: New Radio
- RAN: Radio Access Network
- RACH: Random Access Channel
- RI: Remote Interference
- RIM: Remote Interference Management
- RRC: Radio Resource Control
- SMF: Session Management Function
- UE: User Equipment
- UL: Uplink
- UPF: User Plane Function
- URLLC: Ultra Reliable Low Latency Communication

## Claims

1. An apparatus comprising:
means for identifying at least one of peer nodes from which paging messages were received for paging actions to user equipment; and
means for, based on determined radio conditions by the apparatus, triggering sending of a notification message comprising paging recommendation information to the at least one of identified peer nodes.

2. The apparatus according to claim 1, wherein the determined radio conditions by the apparatus comprises at least one or more unsuccessful transmissions for uplink Random Access Channel (UL RACH) in one or more cells managed by the apparatus.

3. The apparatus according to claim 2, wherein the determining of the unsuccessful UL RACH transmissions in the one or more cells comprises an interference by an interferer.

4. The apparatus according to claim 3, wherein the interferer is a remote radio access node transmitting on a same frequency.

5. The apparatus according to claim 2, wherein the determining of the radio conditions for the one or more unsuccessful UL RACH transmissions in the one or more cells comprises determining that the one or more unsuccessful UL RACH transmissions are in one or more cells which are managed by the apparatus upon receiving a paging message for the user equipment from a sender network node, wherein the received paging message includes a paging area comprising at least one of the at least one or more cells managed by the apparatus.

6. The apparatus according to claim 5, wherein the sender network node is identified as one of the at least one of peer nodes from which the paging messages were received, and to which the notification message is sent through the triggering.

7. The apparatus according to any one of claims 5 or 6, wherein the sender network node is one of an access management function (AMF) in a core network or a radio access node in a radio access network.

8. The apparatus according to claim 1, wherein the at least one peer node from which paging messages were received comprises at least one access management function (AMF) in a core network.

9. The apparatus according to any one of claims 1-8, wherein the paging recommendation information comprises at least one of (a) a list of cells, (b) an indication of the radio conditions for the one or more unsuccessful UL RACH transmissions or an indication of a level of severity characterizing the radio conditions, or (c) a recommendation for paging strategy.

10. The apparatus according to claim 9, wherein the recommendation for paging strategy comprises at least one of:
a recommendation to send a repetition of paging with the same paging area,
a recommendation on the number of paging repetitions to perform keeping the same paging area,
a recommendation on a list of cells to be paged in a next paging attempt,
a recommendation to increase a paging repetition timer due to delay in paging response, or
a recommendation to update or increase a total number of paging attempts.

11. The apparatus according to claims 1-10 is an NG-RAN node.

12. An apparatus comprising:
means for receiving a notification message from a radio access node comprising paging recommendation information concerning the radio access node; and
means for updating a paging strategy using the received paging recommendation information for subsequent paging actions involving this radio access node.

13. The apparatus according to claim 12, wherein the paging recommendation information comprises at least one of a list of cells and an indication of radio conditions for one or more unsuccessful uplink Random Access Channel (UL RACH) transmissions, or an indication of a level of severity characterizing the radio conditions.

14. The apparatus according to claim 12, wherein the updating the paging strategy for subsequent paging actions involving the radio access node comprises means for performing at least one of:
determine to send a repetition of paging with the same paging area,
determine a number of paging repetitions to perform keeping the same paging area,
determine a paging area to be paged in a subsequent paging message,
determine a list of cells to be paged in a subsequent paging message,
determine to increase a paging repetition timer due to delay in paging response, or
determine to update or increase a total number of paging attempts.

15. The apparatus according to claims 12-14, wherein the notification message from the radio access node comprising paging recommendation information concerning the radio access node is received in relation to sending of a first paging message for a user equipment which paging area is served by the radio access node.

16. The apparatus according to claim 15, wherein the apparatus is caused to at least use the paging recommendation information in the received notification message from the radio access node to adjust paging parameters for a repetition paging message of the first paging message to the user equipment.

17. The apparatus according to claim 16, wherein the adjusting the paging parameters for the repetition paging message of the first paging message comprises means for performing at least one of:
determine the paging area of the repetition paging message to be same as the paging area of the first paging message,
determine a number of paging repetitions to be performed towards the user equipment for keeping the same paging area,
determine an updated paging area for the repetition paging message based on the paging recommendation information having been received in the notification message,
determine a waiting time before sending the repetition paging message of the first paging message, or
determine a total number of paging attempts to be performed in relation to the paging of the user equipment.
